Europäisches Patentamt

European Patent Office

Office européen des brevets

(11) Veröffentlichungsnummer: **0 099 974**
**B1**

## (12) EUROPÄISCHE PATENTSCHRIFT

(45) Veröffentlichungstag der Patentschrift: **28.09.88**

(21) Anmeldenummer: **83105356.6**

(22) Anmeldetag: **31.05.83**

(51) Int. Cl.⁴: **B 60 J 3/02**

(54) Sonnenblende für Fahrzeuge.

(30) Priorität: **24.07.82 DE 3227719**

(43) Veröffentlichungstag der Anmeldung:
**08.02.84 Patentblatt 84/06**

(45) Bekanntmachung des Hinweises auf die
Patenterteilung:
**28.09.88 Patentblatt 88/39**

(84) Benannte Vertragsstaaten:
**DE FR GB IT**

(56) Entgegenhaltungen:
**DE-C-2 724 414**
**US-A-1 864 943**

(73) Patentinhaber: **Gebr. Happich GmbH**
**Postfach 10 02 49 Clausenbrücke 1**
**D-5600 Wuppertal 1 (DE)**

(72) Erfinder: **Aschermann, Willi**
**Zeughausstrasse 50**
**D-5600 Wuppertal 2 (DE)**
Erfinder: **Haarhaus, Peter**
**Hohlstrasse 74**
**D-5620 Velbert (DE)**

EP 0 099 974 B1

Courier Press, Leamington Spa, England.

**Beschreibung**

Die Erfindung bezieht sich auf eine Sonnenblende für Fahrzeuge der im Oberbegriff des Patentanspruchs 1 angegebenen Art.

Eine in der DE—C—27 24 414 beschriebene Sonnenblende de gattungsgemäßen Art zeichnet sich in verschiedener Hinsicht gegenüber Sonnenblenden mit um eine waagerechte Achse schwenkbeweglich gelagerten Sonnenblendenkörpern aus, und zwar in bezug auf eine Vereinfachung und Verbesserung beim Überführen des Sonnenblendenkörpers von der Nichtgebrauchslage in die Gebrauchslage, wie auch umgekehrt. Insbesondere wird durch die Bewegung der Hinterkante des Sonnenblendenkörpers nach vorne ausgeschlossen, daß der Sonnenblendenkörper mit einer Längskante zum Fahrzeuglenker oder Beifahrer hin ausgerichtet ist, so daß insoweit bei einem Auffahrunfall die Verletzungsgefahr wesentlich herabgemindert ist. Weiterhin bietet die Sonnenblende nach der DE—C—27 24 414 den Vorteil, daß der Sonnenblendenkörper nicht störend in Richtung auf den Fahrzeuglenker oder Beifahrer in das Fahrzeuginnere hineinbewegt wird, was bei niedrig ausgebildeten Fahrzeugen mit engen räumlichen Verhältnissen wichtig ist. Trotz der aufgezeigten Vorteile, die die bekannte Sonnenblende aufweist, hat sie sich in der Praxis noch nicht durchsetzen können, was darauf zurückzuführen ist, daß für den Bewegungsablauf ein relativ kompliziertes Hebel-Kulissenführungssystem erforderlich ist.

Eine andere Sonnenblende der gattungsgemäßen Art, von der die vorliegende Erfindung in erster Linie ausgeht, ist in der US—A—1,864,943 gezeigt und beschrieben. Bei dieser bekannten Sonnenblende weist der Sonnenblendenkörper ein den oberen bzw. hinteren Längsrad überragendes Lagerböckchen auf, dessen freies Ende als Schlitten mit Führungszapfen ausgebildet ist, die jeweils in eine kurvenförmig verlaufend ausgebildete Führungsnut von an der Fahrzeugkarosserie befestigbaren Laufschienen eingreifen. Dabei sind nachteiligerweise sowohl das Lagerböckchen als auch die Laufschienen derart angeordnet, daß sie unabhängig davon, ob sich der Sonnenblendenkörper in der Gebrauchs- oder Nichtgebrauchslage befindet, in den Fahrgastraum des Fahrzeuges hineinragen. Dadurch wird nicht nur das gesamte Erscheinungsbild der Sonnenblende äußerst negativ beeinflußt sondern insbesondere auch eine den gültigen Sicherheitsanforderungen entgegenstehende Gefahrenquelle geschaffen, weil Fahrzeuginsassen bei einer Notbremsung oder einem Auffahrunfall mit dem Kopf auf die ins Fahrzeuginnere vorstehenden Ecken und Kanten der Führungseinrichtung aufprallen und sich dadurch schwer verletzen können. Im übrigen erscheint auch die Herstellung und Montage dieser bekannten Sonnenblende relativ teuer und arbeitsaufwendig, weil bei der Herstellung des Lagerböckchens und der Laufschiene von abfallträchtigen und mit Nachbearbeitungen behafteten Metallstanzteilen ausgegangen werden soll und weil z.B. bei den Führungszapfen Nietköpfe geformt werden müssen.

Der Erfindung liegt nun, ausgehend von einer Sonnenblende der eingangs genannten Art, die Aufgabe zugrunde, die für den Bewegungsablauf des Sonnenblendkörpers erforderlich Führungselemente zu vereinfachen und kostengünstig zu gestalten.

Zur Lösung dieser Aufgabe sind die im kennzeichnenden Teil des Patentanspruchs 1 angegeben Merkmale vorgesehen.

Vorteilhafte Ausgestaltungen und zweckmäßige Weiterbildungen der Erfindung sind in den Unteransprüche gekennzeichnet.

Im folgenden wird die Erfindung durch ein Ausführungsbeispiel anhand der Zeichnung näher erläutert. Es zeigen

Fig. 1 eine schematische Seitenansicht der in einem Fahrzeug angeordneten Sonneblende,

Fig. 2 eine Vorderansicht in Pfeilrichtung II nach Fig. 1 gesehen,

Fig. 3 eine Seitenansicht der Sonnenblende mit Führungseinrichtung,

Fig. 4 eine Ansicht auf die Rückseite der Sonnenblende,

Fig. 5 eine Einzelheit der Erfindung und

Fig. 6 einen Schnitt etwa folgend der Linie VI—VI nach Fig. 4.

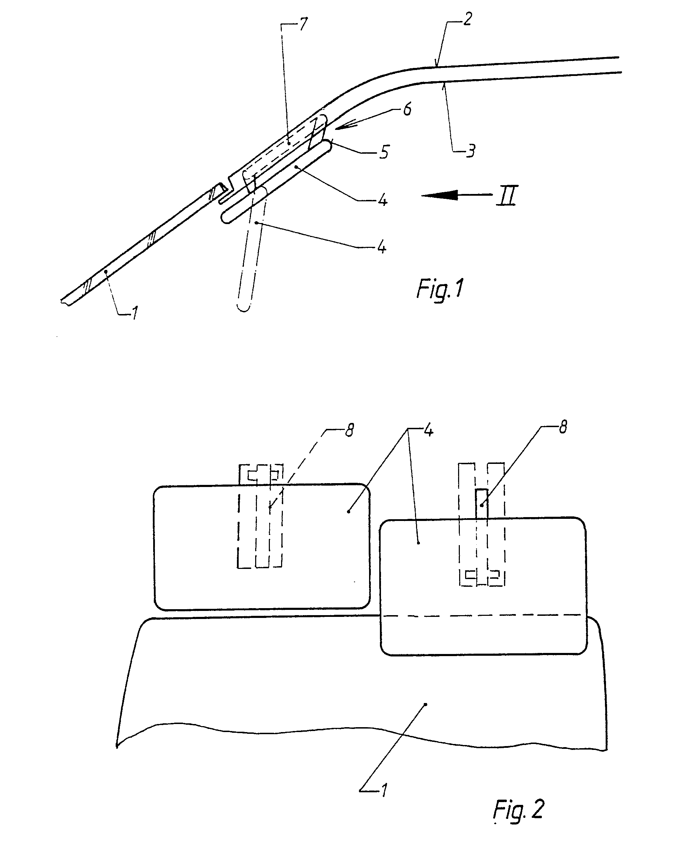

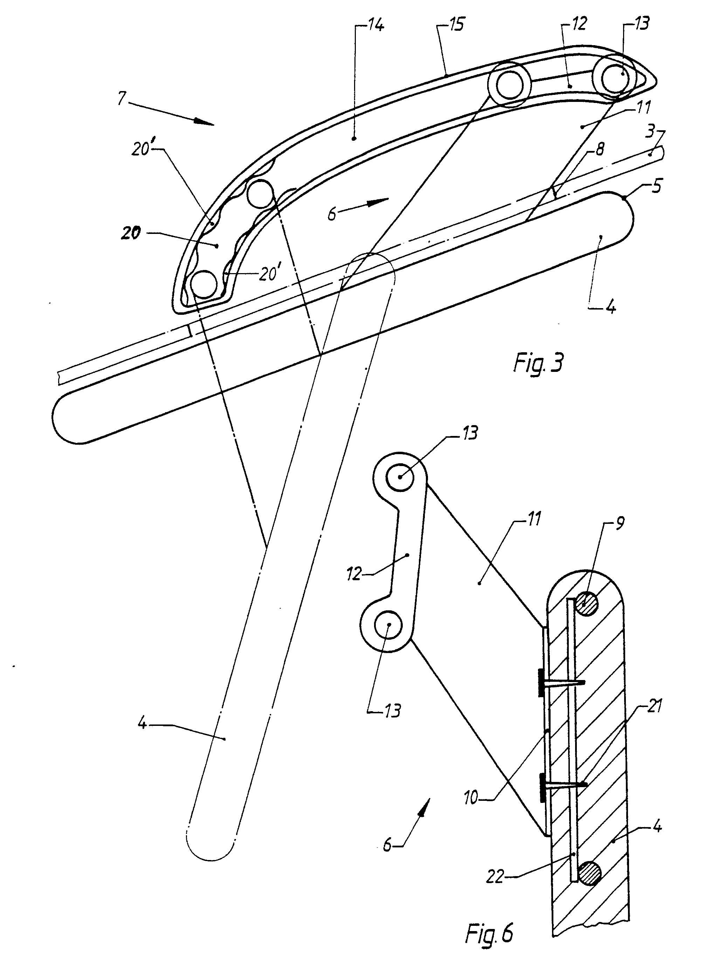

Fig. 1 zeigt die prinzipielle Anordnung der neuen Sonnenblende in einem Fahrzeug, von dem lediglich die Windschutzscheibe 1, ein Teil des Fahrzeugdachs 2 und der Fahrzeughimmel 3 angedeutet sind. Der Sonnenblendenkörper 4 befindet sich in der Nichtgebrauchslage, welche mit ausgezogenen Linien dargestellt ist, oberhalb der Windschutzscheibe 1 in einer etwa parallelen Anlage am Fahrzeughimmel 3. Der Sonnenblendenkörper 4 weist an seiner Rückseite ein nach hinten aus der Sonnenblendenkörperebene hervorstehendes und den oberen bzw. hinteren Längsrand 5 des Sonnenblendenkörpers 4 überragendes Lagerböckchen 6 auf, dessen freies Ende, in einer noch zu beschreibenden Weise, in einer vorzugsweise zwischen dem Fahrzeugdach 2 und dem Fahrzeughimmel 3 angeordneten Führungseinrichtung 7 gleitend, geführt ist. Der Sonnenblendenkörper 4 kann durch eine reine Scheibebewegung aus seiner Nichtgebrauchslage in die, in Fig. 1 mit strichpunktierten Linien angedeutete Gebrauchslage überführt werden. Im Fahrzeughimmel 3 ist für den Durchlaß des Lagerböckchens 6 lediglich ein Längsschlitz 8 (vgl. Fig. 2 und 3) vorgesehen.

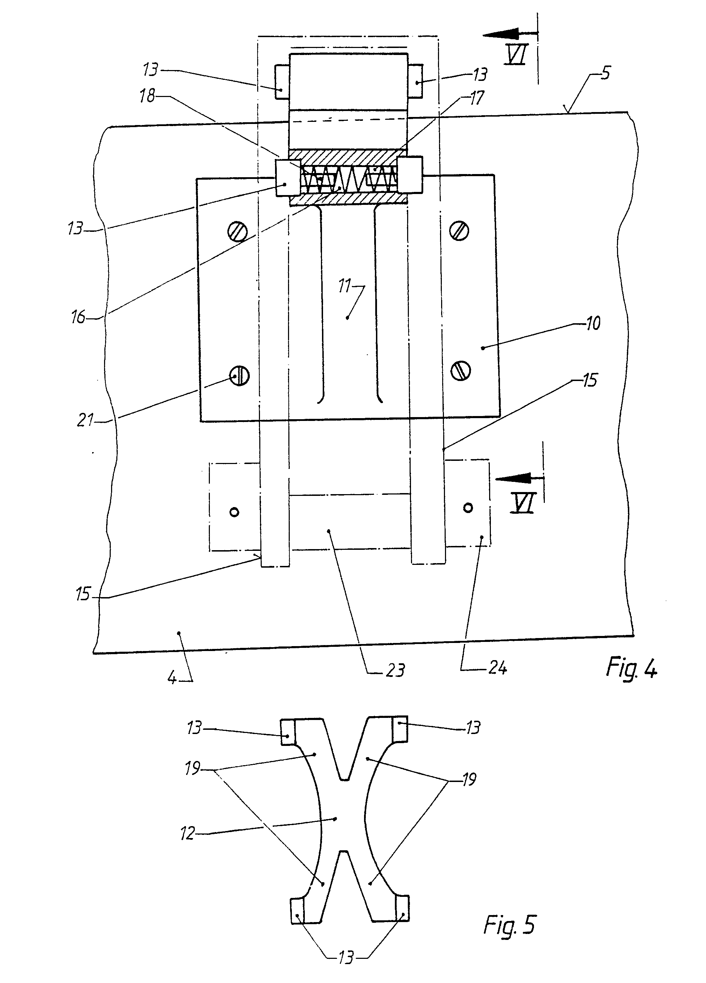

Die Führungszapfen 13 liegen unter gewisser Federspannung gegen den Boden der Führungsnuten 14 an. Die Federspannung kann dadurch erreicht werden, daß (vgl. Fig. 4) die Führungszapfen 13 jeweils von einer im Schlitten 12 vorgesehenen Durchgangsbohrung 16 aufgenommen und durch eine zwischengefügte Druckfeder 17, die aus einer Schraubenfeder bestehen kann, nach außen belastet sind. Im dargestellten Ausführungsbeispiel weisen die Führungszapfen 13 in die Durchgangsbohrung 16 eingreifende koaxiale Ansätze 18 mit darübergestülpter Druckfeder 17 auf.

Eine erfindungsgemäße Variante zeigt Fig. 5.

Hier ist der Schlitten 12 mit federelastisch gegeneinanderbewegbaren etwa V-förmig zueinander ausgerichteten Ärmchen 19 mit an deren freien Enden angeordneten Führungszapfen 13 ausgebildet.

Die anhand der Fig. 4 und 5 beschriebene Anordnung der Führungszapfen 13 ermöglicht jeweils durch Gegeneinanderdrücken der Führungszapfenpaare deren einfaches Einführen in die Führungsnuten 14 der Laufschienen 15. Die gewisse Federspannung ermöglicht es weiter, die Führungszapfen 13 in durch Vertiefungen 20, Einschnürungen 20' od. dgl. gebildete Rastungen in den Führungsnuten 14 einrasten zu lassen, mit dem Erfolg, daß der Sonnenblendkörper 4 in unterschiedlichen Schiebelagen gehalten wird. Es ist zweckmäßig, auch am hinteren Ende der Führungsnuten 14 eine Rastung vorzusehen, um den Sonnenblendenkörper 4 auch in seiner Nichtgebrauchslage sicher zu halten.

Dans aus der Grundplatte 10, dem Steg 11 und dem Schlitten 12 bestehende Lagerböckchen 6 kann vorteilhafterweise aus einem einstückigen Kunststoffspritzgußteil bestehen. Im falle der Ausbildung des Schlittens 12 nach Fig. 5 können auch die Führungszapfen 13 einstückig mit angespritz sein, was eine weitere Verbilligung bedeutet.

Das Lagerböckchen 6 kann mittels Schrauben 21 am Sonnenblendenkörper 4 befestigt sein, der für diesen Zweck eine eingelagerte und mit dem Drahtrahmen 9 verbundene Platte 22 aufweist. Es ist aber auch möglich, an der Grundplatte 10 Steckdübel einstückig anzuformen, die im Sonnenblendenkörper 4 in hierfür vorgesehene Steckaufnahmen einrastbar sind.

Die Laufschienen 15 bestehen ebenfalls vorzugsweise aus Kunststoffspritzgußteilen oder aus einem einstückigen Kunststoffspritzgußteil, bei dem die beiden Laufschienen 15 über Verbindungsstreben 23 oder über eine Verbindungsplatte miteinander verbunden sind. Weiterhin sind an den Laufschienen 15 Flansche 24 zur Befestigung an einer Fahrzeugkarosserie angeformt.

Wie schon anhand der Fig. 1 erläutert, ist bevorzugt vorgesehen, daß die Laufschienen 15 im Bereich zwischen dem Fahrzeugdach 2 und dem Fahrzeughimmel 3 angeordnet und am Dachholm befestigt sind. Die gesamte Führungseinrichtung ist dadurch den Blicken eines Betrachters entzogen. Es verbleibt lediglich ein zum Durchlaß des Steges 11 erforderlicher Längsschlitz 8, der sich aber auch, sofern er störend wirken sollte, durch elastische Bänder, Borsten od. dgl. verschließen bzw. verkleiden läßt.

Um die Laufschienen 15 an der Fahrzeugkarosserie befestigen und die Führungszapfen 13 in die Führungsnuten 14 einbringen zu können, kann der Fahrzeughimmel 3 mit einem wieder verschließbaren Ausschnitt versehen sein, wie es auch möglich ist, den Fahrzeughimmel nach erfolgter Sonnenblendenmontage anzubringen.

**Patentansprüche**

1. Sonnenblende für Fahrzeuge mit einem Sonnenblendenkörper (4), der aus einer oberhalb einer Windschutzscheibe (1) am Fahrzeughimmel (3) anliegend angeordneten Nichtgebrauchslage in eine die Windschutzscheibe (1) bereichsweise abdeckenden Gebrauchslage verschiebbar ist, wobei der Sonnenblendenkörper (4) beim Verschieben in die Gebrauchslage mit der Hinterkante (5) nach vorne und mit der Vorderkante gleichzeitig nach unten bewegt wird, und wobei der Sonnenblendenkörper (4) zumindest ein den oberen bzw. hinteren Längsrand überragendes Lagerböckchen (6) aufweist, dessen freies Ende als Schlitten (12) mit Führungszapfen (13) ausgebildet ist, die jeweils in eine kurvenförmig verlaufend ausgebildete Führungsnut (14) von an der Fahrzeugkarosserie befestigbaren Laufschienen (15) eingreifen, dadurch gekennzeichnet, daß das Lagerböckchen (6) eine an der Rückseite des Sonnenblendenkörpers (4) befestigte Grundplatte (10) und einen nach hinten aus der Sonnenblendenkörperebene heraustretenden, einen Längsschlitz (8) im Fahrzeughimmel (3) durchgreifenden Steg (11), an dessen freien Ende der Schlitten (12) sitzt, aufweist, daß die Laufschienen (15) in einer parallel zueinander verlaufenden Anordnung zwischen dem Dachblech und dem Fahrzeughimmel (3) am Dachrahmen eines Fahrzeugs befestigbar sind und jeweils eine durch einen U-förmigen Querschnitt gebildete Führungsnut (14) aufweisen, deren Öffnungen einander gegenüberliegen und daß der Schlitten (12) vier Führungszapfen (13) aufweist, von denen jeweils zwei auf einer gemeinsamen Achse liegen und unter Federspannung am Boden der Führungsnuten (14) anliegen.

2. Sonnenblende nach Anspruch 1, dadurch gekennzeichnet, daß die Führungszapfen (13) der Führungszapfenpaare jeweils von einer im Schlitten (12) vorgesehenen Durchgangsbohrung (16) aufgenommen und durch eine zwischengefügte Druckfeder (17) nach außen belastet sind.

3. Sonnenblende nach Anspruch 1, dadurch gekennzeichnet, daß der Schlitten (12) mit federelastisch gegeneinander bewegbaren, etwa V-förmig zueinander ausgerichteten Ärmchen (19) mit an deren freien Enden angeordneten Führungszapfen (13) ausgebildet ist.

4. Sonnenblende nach einem oder mehreren der Ansprüche 1 bis 3, dadurch gekennzeichnet, daß das Lagerböckchen (6) mit Grundplatte (10), Steg (11) und Schlitten (12) aus einem einstückig ausgebildeten Kunststoffspritzgußteil besteht.

5. Sonnenblende nach einem oder mehreren der Ansprüche 1 bis 3, dadurch gekennzeichnet, daß das Lagerböckchen (6) mit Grundplatte (10), Steg (11), Schlitten (12) und Führungszapfen (13) aus einem einstückig ausgebildeten Kunststoffspritzgußteil besteht.

6. Sonnenblende nach einem oder mehreren der Ansprüche 1 bis 5, dadurch gekennzeichnet, daß zumindest eine Führungsnut (14) mit als überwindbare Rasten für die darin eingreifenden Führungszapfen (13) dienenden Vertiefungen (20), Einschnürungen (20') oder dergleichen ausgebildet ist.

7. Sonnenblende nach einem oder mehreren der Ansprüche 1 bis 6, dadurch gekennzeichnet, daß die Laufschienen (15) als Kunststoffspritzgußteile ausgebildet sind.

8. Sonnenblende nach einem oder mehreren der Ansprüche 1 bis 7, dadurch gekennzeichnet, daß die Laufschienen (15) durch Verbindungsstreben (23) oder durch eine Verbindungsplatte einstückig miteinander ausgebildet sind.

## Revendications

1. Pare-soleil pour véhicules comportant un corps de pare-soleil (4) qui peut être déplacé d'une position de repos située au-dessus d'un pare-brise (1) appuyant sur le plafond (3) du véhicule, dans une position d'utilisation recouvrant une zone du pare-brise (1), dans lequel, lors de son déplacement en position d'utilisation, le corps de pare-soleil (4) est déplacé avec l'arête postérieure (5) vers l'avant et avec l'arête antérieure vers le bas, et dans lequel le pare-soleil (4) comporte au moins une embase (6) dépassant au-dessus du bord longitudinal supérieur et postérieur, dont l'extrémité libre est réalisée sous forme de coulisseau (12) muni de tétons de guidage (13) qui pénétrant respectivement dans une rainure de guidage (14) de forme incurvée formée par des glissières (15) pouvant être fixées sur la carrosserie du véhicule, caractérisé en ce que l'embase (6) comporte une plaque de base (10) fixée sur le côté arrière du corps de pare-soleil (4) et une nervure (11) sortant hors du plan du pare-soleil (4) et passant par une fente longitudinale dans le plafond (3) du véhicule, nervure à l'extrémité libre de laquelle se trouve le coulisseau (12), en ce que les glissières (15) peuvent être fixées en étant disposées parallèlement entre elles, entre la tôle du toit et le plafond (3) du véhicule, sur le cadre du toit d'un véhicule, et comportent respectivement une rainure de guidage (14) à section en U, les ouvertures de ces rainures de guidage étant en vis-à-vis, et en ce que le coulisseau (12) comporte quatre tétons de guidage (13), dont deux chaque fois se trouvent sur un axe commun et appuient, sous l'action d'un ressort, contre le fond des rainures de guidage (14).

2. Pare-soleil selon la revendication 1, caractérisé en ce que les tétons de guidage (13) des paires de tétons sont logés respectivement dans un alésage traversant (16) prévu dans le coulisseau (12) et contraints vers l'extérieur par un ressort de pression (17) intercalé.

3. Pare-soleil selon la revendication 1, caractérisé en ce que le coulisseau (12) est rélié avec de petis bras (19) orientés l'un vers l'autre sensiblement en formant un V, pouvant être déplacés élastiquement l'un vers l'autre, et comportant les tétons de guidage (13) disposés à leurs extrémités libres.

4. Pare-soleil selon l'une ou plusieurs des revendications 1 à 3, caractérisé en ce que l'embase (6) avec sa plaque de base (10), la nervure (11) et le coulisseau (12) est constitué par une pièce monobloc en matière plastique moulée par injection.

5. Pare-soleil selon l'une ou plusieurs des revendications 1 à 3, caractérisé en ce que l'embase (6) avec sa plaque de base (10), la nervure 11, le coulisseau (12) et les tétons de guidage (13) est constitué par une pièce monobloc en matière plastique moulé par injection.

6. Pare-soleil selon l'une ou plusieurs des revendications 1 à 5, caractérisé en ce qu'au moins une rainure de guidage (14) est réalisée avec des cavités (20), des eitranglements (20') ou l'analogue servant d'arrêts pouvant être surmontés pour les tétons de guidage (13) qui y pénètrent.

7. Pare-soleil selon l'une ou plusieurs des revendications 1 à 6, caractérisé en ce que les glissières (15) sont réalisées en tant que pièces en matière plastique moulées par injection.

8. Pare-soleil selon l'une ou plusieurs des revendications 1 à 7, caractérisé en ce que les glissières (15) sont réalisées ensemble, de façon monobloc, à l'aide d'entretoises (23) ou d'une plaque de liaison.

## Claims

1. A sun visor for vehicles comprising a body (4) movable from an inoperative position adjacent the vehicle roof lining (3) above a windscreen (1) into an operative position partly covering the windscreen (1), the visor (4) being moved in to the operative position when its rear edge (5) is moved forwards and its front edge is simultaneously moved downwards, the body (4) having at least one bearing block (6) projecting from its top or rear longitudinal edge, the free end of the block being in the form of a slide (12) and guide pins (13), each of which engage in a curved groove (14) between rails (15) secured to the vehicle body, characterised in that the bearing block (6) comprises a base plate (10) secured to the back of the visor (4) and a web (11) extending backwards from the visor-body plane and through a longitudinal slot (8) in the roof lining (3), a slide (12) being disposed at the free end of the web, the rails (15) can be secured parallel to one another to the roof frame of a vehicle between the metal roof and the lining (3) and each have a U-section guide groove (14), the groove openings facing one another, and the slides (12) have four guide pins, each pair of which lie on a common axis and are urged by spring tension against the base of the guide slots (14).

2. A visor according to claim 1, characterised in that the guide pins (13) in each pair are received in a through bore (16) in the slide (12) and loaded outwardly by an interposed compression spring (17).

3. A visor according to claim 1, characterised in that the slide (12) is formed with arms (19) approximately in a V and movable relative to one another by spring elasticity and having guide pins (13) at their free ends.

4. A visor according to one or more of claims 1 to 3, characterised in that the bearing block (6), base plate (10), web (11) and slide (12) are made from a one-piece plastics injection-moulded part.

5. A sun visor according to one or more of claims 1 to 3, characterised in that the block 6, base plate (10), web (11), slide (12) and guide pins (13) are made from a one-piece plastics injection-moulded part.

6. A visor according to one or more of claims 1 to 5, characterised in that at least one guide groove (14) is formed with recesses (20), constrictions (20') or the like serving as surmountable catches for the guide pins (13) engaging therein.

7. A visor according to one or more of claims 1 to 6, characterised in that the rails (15) are plastics injection-moulded parts.

8. A visor according to one or more of claims 1 to 7, characterised in that the rails (15) are connected to one another in one piece by struts (23) or a plate.

Fig.1

Fig. 2

Fig. 3

Fig. 6

Fig. 4

Fig. 5